Europäisches Patentamt

European Patent Office

Office européen des brevets

(11) Numéro de publication: **0 343 140**
**A2**

## DEMANDE DE BREVET EUROPEEN

(21) Numéro de dépôt: **89870065.3**

(22) Date de dépôt: **19.04.89**

(51) Int. Cl.⁴: **E 21 B 47/024**
E 21 B 7/04, G 05 D 1/03

(30) Priorité: **19.04.88 EP 88870064**

(43) Date de publication de la demande:
**23.11.89 Bulletin 89/47**

(84) Etats contractants désignés: **ES GR**

(71) Demandeur: **"BLIS"**
**Vuldershoek 18**
**B-3170 Herselt (BE)**

(72) Inventeur: **Bellens, Willy**
**Weistraat 4**
**B-2840 Haacht (BE)**

(74) Mandataire: **Callewaert, Jean et al**
**Bureau Gevers S.A. rue de Livourne 7 bte 1**
**B-1050 Bruxelles (BE)**

(54) **Procédé et dispositif pour surveiller la progression dans le sol d'une tête de forage.**

(57) Pour surveiller la progression d'une tête de forage orientable (3), on crée dans le sol, autour d'une trajectoire (10) deux champs magnétiques différents à l'aide des conducteurs (8, 9) et où on prélève le courant induit par ce champ magnétique dans une bobine associée à la tête de forage, on détermine la différence de phase entre deux courants induits dans la bobine par deux champs magnétiques différents, la position de la tête de forage étant chaque fois déduite en combinant une mesure de l'amplitude du courant et ladite différence de phase.

Fig.1.

EP 0 343 140 A2

## Description

### Procédé et dispositif pour surveiller la progression dans le sol d'une tête de forage.

L'invention concerne un procédé pour surveiller, lors d'un forage dans le sol d'une galerie de faible section, la progression d'une tête de forage orientable, suivant lequel on crée dans le sol, autour d'au moins une partie d'une trajectoire à suivre par la tête de forage, au moins deux champs magnétiques différents, et où pour chacun des champs magnétiques créés on prélève un courant induit par ce champ magnétique créé dans une bobine associée à la tête de forage, et on mesure chaque fois l'amplitude du courant induit par le champ magnétique créé.

Un tel procédé est décrit dans le brevet américain n° 3.529.682. Dans le procédé décrit dans ce brevet américain on crée des champs magnétiques dans le sol en disposant au-dessus de la trajectoire que doit suivre la tête de forage deux boucles, dont l'une engendre un champ magnétique du type dipôle alors que l'autre engendre un champ magnétique du type quadrupôle. Les deux champs magnétiques sont créés alternativement dans le temps formant ainsi des champs magnétiques qui diffèrent dans le temps, la fréquence et également en leur géométrie. La tête de forage est équipée d'un ensemble de bobines, dans le présent cas de trois bobines qui sont disposés perpendiculairement l'une par rapport à l'autre, et qui sont fixées à la tête de forage. Lorsque la tête de forage tourne dans le sol, les champs magnétiques vont induire un courant électrique dans les bobines. La position dans le sol de la tête de forage peut alors être déduite sur base du courant induit dans les trois bobines, entre autres sur base de l'amplitude du courant induit par chaque champ dans chaque bobine. En déterminant les positions successives de la tête de forage on parvient alors à surveiller la progression dans le sol de la tête de forage.

Un inconvénient du procédé connu est qu'il faut un calcul assez complexe pour déterminer la position de la tête de forage dans le sol. De plus, l'emploi d'un ensemble de trois bobine impose des moyens techniques assez complexes pour la réalisation du procédé connu, en outre il impose l'emploi d'une quatrième bobine, servant de bobine de référence.

L'invention a pour but de remédier à ces inconvénients en présentant un procédé plus simple.

A cet effet, suivant l'invention, le procédé est caractérisé en ce qu'on détermine la différence de phase entre deux courants induits à peu près au même endroit dans la bobine par deux champs magnétiques différents, la position de la tête de forage étant chaque fois déduite en combinant ladite mesure de l'amplitude et ladite différence de phase. Pour déterminer ladite différence de phase il suffit d'une bobine et de plus, la différence de phase peut facilement être déterminée sur simple mesure du courant sans devoir faire appel à une bobine de référence.

Avantageusement, pour déterminer ladite position sur base d'amplitude du courant, on détermine le rapport d'amplitude entre deux courants induits à peu près au même endroit dans la bobine par deux champs magnétiques différents. En considérant les valeurs relatives des amplitudes, il ne faut pas prendre en compte les fluctuations sur la valeur absolue et les mesures sont moins sensibles à la composition particulière du sol dans lequel est appliqué le forage.

Suivant une première forme de réalisation avantageuse du procédé suivant l'invention et pour déterminer ladite différence de phase, on mesure la différence de temps entre les moments où les deux courants ont une intensité égale à zéro. Ceci permet de facilement déterminer ladite différence de phase.

Suivant une deuxième forme de réalisation avantageuse du procédé suivant l'invention, on crée deux champs magnétiques à partir de deux boucles disposées l'une à côté de l'autre sensiblement parallèles entre elles et à la trajectoire ainsi qu'à une distance prédéterminée l'une de l'autre.

De préférence, pour créer les champs magnétiques, on fait passer un courant alternatif dans les boucles, lequel courant possède une fréquence d'au moins 1 KHz. Ainsi des perturbations dues à l'environnement ne gênent pas les mesures effectuées.

Suivant une troisième forme de réalisation avantageuse du procédé suivant l'invention, pour orienter l'axe de la tête de forage, on détermine un ensemble de positions de consigne et pour chaque position déterminée, on compare cette dernière position à la position de consigne assignée à la progression instantanée de la tête de forage et, dans le cas où la position déterminée ne correspond pas à ladite position de consigne, on réoriente la tête de forage pour qu'elle rejoigne la position de consigne. Ceci permet à chaque instant de corriger le parcours de la tête de forage.

L'invention a également pour objet un dispositif pour la mise en oeuvre du procédé suivant l'invention.

D'autres détails et particularités de l'invention ressortiront de la description des dessins annexés au présent mémoire et qui illustrent, à titre d'exemples non limitatifs, le procédé et le dispositif de forage suivant l'invention.

La figure 1 est une vue schématique en plan illustrant le procédé suivant l'invention ainsi que le dispositif de forage muni de moyens qui, d'une part, créent le champ magnétique susdit dans la zone de forage et, d'autre part, fournissent les informations permettant de réorienter si nécessaire la tête de forage.

La figure 2 est une vue, en élévation et en coupe, du capteur associé à la tête de forage.

Les figures 3 et 4 représentent schématiquement les champs magnétiques créés dans le sol.

La figure 5 est un graphique représentant deux sinusoïdes dont chacune représente un courant induit dans la bobine pour une position déterminée de la tête de forage.

La figure 6 est une vue, schématique et en coupe dans le sol, illustrant le procédé suivant l'invention.

La figure 7 est une vue schématique d'une tête de forage ayant une face oblique.

La figure 8 est un schéma d'un dispositif de traitement de données faisant partie du dispositif de forage suivant l'invention.

La figure 9 est un organigramme représentant un exemple d'un programme de gestion du procédé suivant l'invention.

La figure 10 est un organigramme représentant un exemple d'un programme pour réorienter la tête de forage.

La figure 11a resp. 11b illustre le rapport entre la profondeur dans le sol et la différence de phase resp. le rapport d'amplitudes des courants mesurés.

Dans les différentes figures, les mêmes notations de référence désignent des éléments identiques ou analogues.

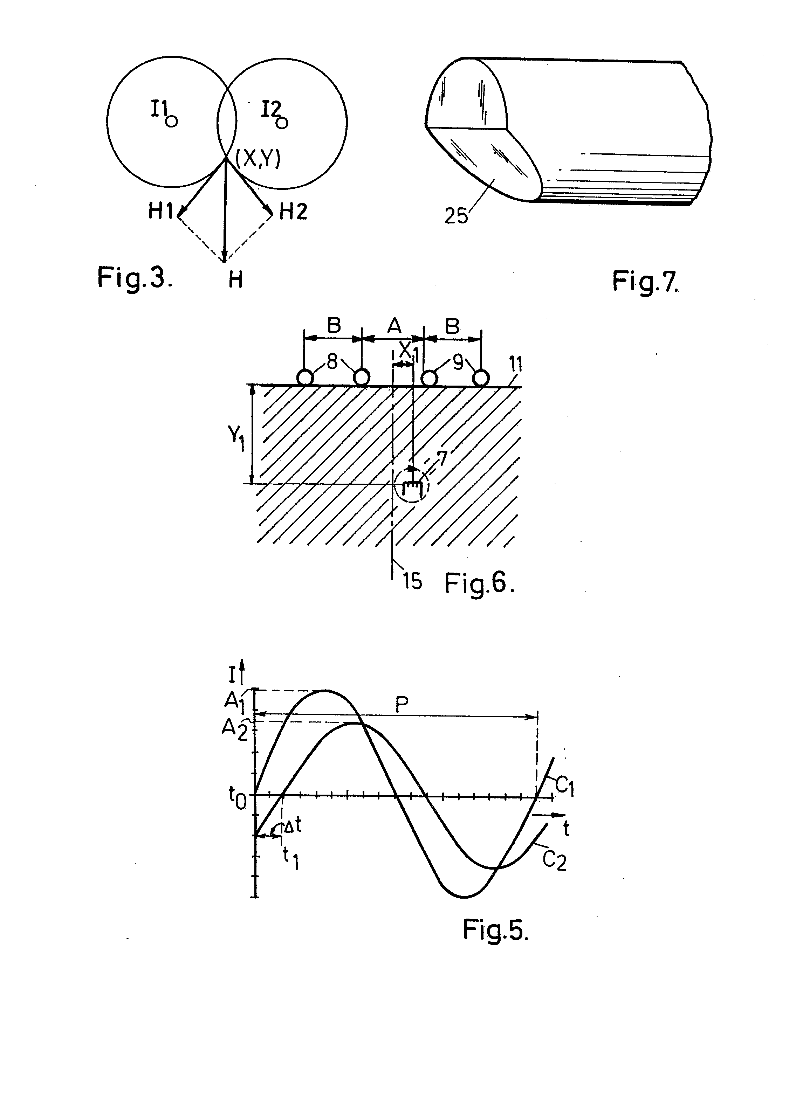

Le procédé suivant l'invention et illustré aux dessins est essentiellement destiné au forage de galeries de faible section suivant une trajectoire prédéterminée comprise entre deux points 1 et 2 à l'aide d'une tête de forage orientable 3 dont on surveille la progression dans le sol pendant le forage et qui est montée à l'extrémité d'un élément tubulaire déformable 4 qui est par exemple enroulé sur un tambour 5 d'une unité de forage 6 automotrice ou tractable. Pour permettre la conduite du forage, on induit dans le sol autour d'au moins une partie de la trajectoire que doit suivre la tête de forage 3, deux champs magnétiques tels qu'illustrés à la figure 3, on capte la valeur de chacun de ces champs magnétiques au niveau de la tête 3, on transforme ensuite ces valeurs en au moins une coordonnée de position de la tête de forage 3 et on utilise, si la tête dévie de sa trajectoire prédéterminée, cette coordonnée pour orienter la tête 3 en la ramenant sur ladite trajectoire. Les champs magnétiques peuvent être induit soit sur toute la longueur de la trajectoire soit sur une partie de cette dernière, par exemple uniquement autour de l'endroit où se meut la tête de forage.

Pour capter les valeurs susdites des champs magnétiques créés, on prélève le courant qui est induit par ces champs à l'aide d'une bobine 7 associée à la tête de forage 3.

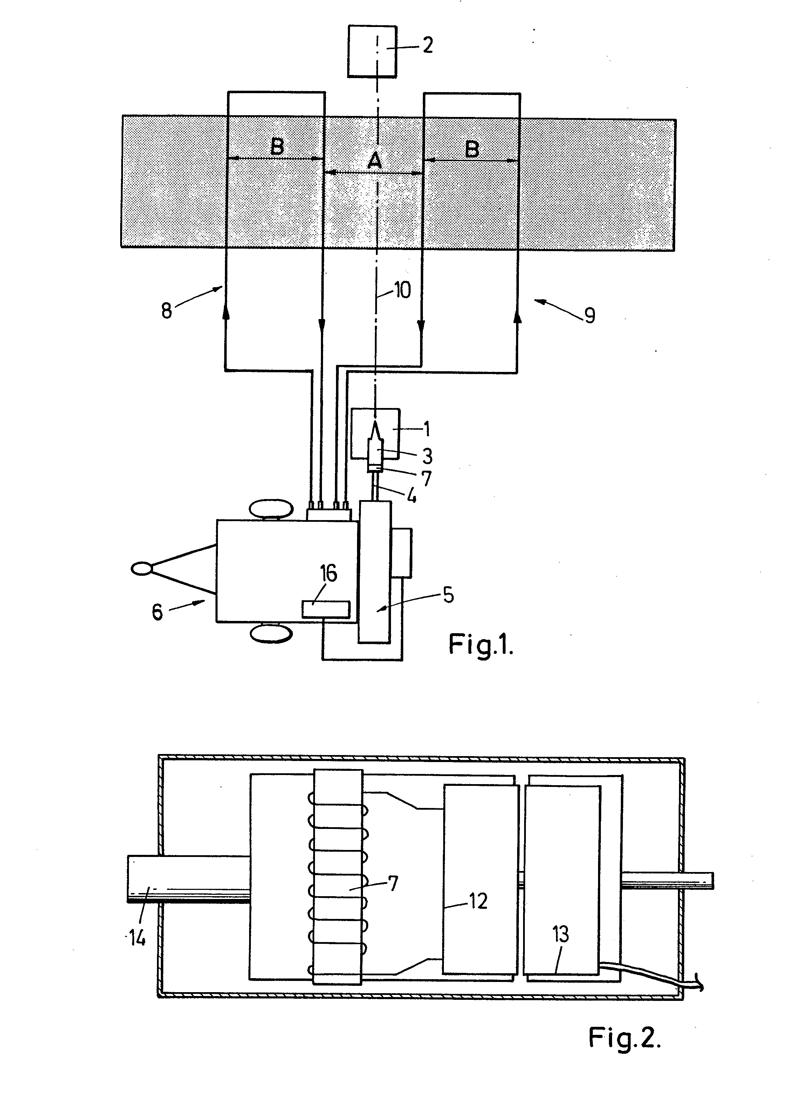

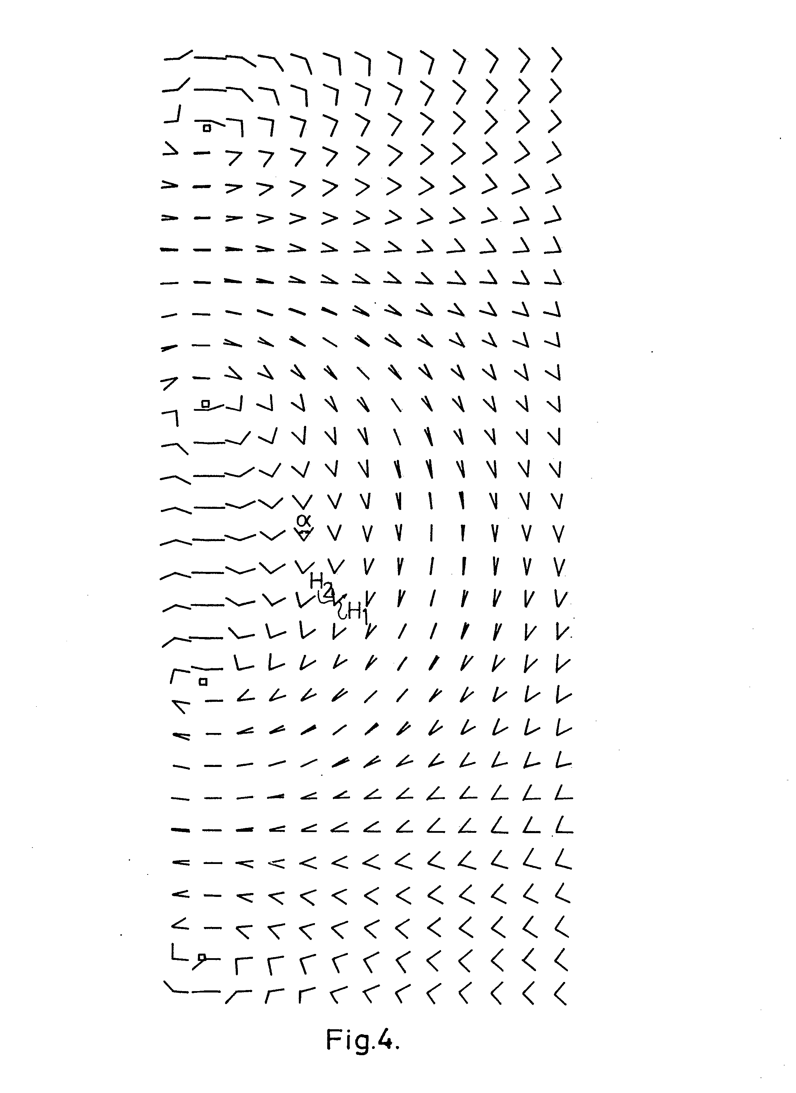

Les deux champs magnétiques sont par exemple créés à l'aide de deux conducteurs 8 et 9 formant chacun une boucle et disposés sur le sol (voir figure 1). Les boucles sont disposées en parallèle l'une à l'autre et de préférence en parallèle à l'axe de forage. La distance A qui sépare ces conducteurs 8 et 9 et les champs qu'ils engendrent est choisie de manière à obtenir une valeur déterminée du champ magnétique dans le plan vertical passant par l'axe de forage 10. Ainsi cette distance A est par exemple égale à 1 m et la distance B entre deux fils de la boucle est par exemple également égale à 1 m. Les champs magnétiques créés ont de préférence une grandeur équivalente, mais il va de soi que ces grandeurs peuvent également être différentes entres elles. Au lieu de disposer les boucles à une distance A l'une de l'autre, il est également possible de les déposer côte à côte (A = 0)

Pour surveiller la progression de la tête de forage dans le sol et en particulier pour vérifier ssi la tête de forage ne s'écarte pas de la trajectoire imposée, on échantillonne à intervalles réguliers la valeur du courant induit dans la bobine 7 par les champs magnétiques. Puisque ces champs magnétiques de par leur nature varient en fonction de leur position dans le sol, on, parvient à déterminer la position dans le sol de la bobine 7 et donc de la tête de forage 3 qui lui est associée, sur base du courant électrique induit par les champs magnétiques dans la bobine 7.

Tant pour la conduite manuelle des opérations de forage que pour une conduite automatique de ces dernières, on détermine pour orienter l'axe de la tête de forage 3, un ensemble de positions de consigne et, pour chaque position déterminée, on compare cette dernière position à la position de consigne assignée à la progression instantanée de la tête de forage et, dans le cas où la position déterminée ne correspond pas à ladite position de consigne, on réoriente la tête de forage pour qu'elle rejoigne la position de consigne.

Le capteur illustré à la figure 2 comporte au moins une bobine 7 associée à la tête de forage 3 qui est entraînée en rotation. La bobine 7 peut être fixée sur l'axe 14 de la tête de forage et tourner à la même vitesse de rotation que ce dernier. Il est toutefois possible de monter la bobine 7 sur un axe indépendant qui est relié à l'axe 14 à l'aide d'un engrenage. Cette dernière solution permet de faire tourner la bobine 7 en synchronisme avec la tête mais à une vitesse différente permettant ainsi d'améliorer la qualité des mesures faites. Un courant induit par le champ magnétique passe à travers la bobine et est transmis à un premier élément 12 d'un coupleur électromagnétique. Le deuxième élément 13 du coupleur électromagnétique est relié à une sortie du capteur et permet d'envoyer le courant induit dans la bobine à un dispositif de traitement de données. Le coupleur électromagnétique permet le couplage du courant d'une unité rotative (la bobine tournante) à une unité fixe (la sortie). Au lieu d'utiliser un coupleur électromagnétique on pourrait également utiliser des balais.

Lorsque la tête 3 tourne dans le sol, elle entraîne la bobine 7 qui y est associée, dans un mouvement rotatif. Il est également possible d'équiper le capteur d'un moteur qui entraîne la bobine dans un mouvement rotatif. Cette dernière solution peut s'appliquer dans le cas où la tête de forage ne tourne pas mais est par exemple pourvue d'éjecteurs de fluide.

La figure 3 représente schématiquement la direction et l'amplitude des champs magnétiques $H_1$ et $H_2$ induit dans le sol. Les champs magnétiques $H_1$ et $H_2$ sont créés à l'aide de boucles 8 resp. 9 dans lesquelles on induit alternativement un courant ($I_1$ resp. $I_2$). De préférence l'intensité du courant induit dans les boucles est la même pour chaque boucle. Ceci est par exemple réalisé en alimentant chaque boucle à l'aide d'une même source de courant qui est reliée à chaque boucle par l'intermédiaire d'un commutateur qui envoie alternativement le courant dans l'une et dans l'autre boucle. Mais on pourrait également fournir des courants différents en fréquence et/ou en intensité dans les différentes boucles. Le courant induit dans chaque boucle va donc créer dans le sol aux alentours de la trajectoire 10 un champ magnétique. La valeur de chacun de ces champs magnétique, c'est-à-dire sa direction et son intensité est différente pour chaque endroit du sol où les champs sont induits. Chaque courant forme respectivement un champ magnétique de grandeur $H_1$, $H_2$, dont la direction est indiquée à la figure 3 et qui provoque un champ résultant H. La figure 4 illustre un exemple des différents vecteurs des champs magnétiques $\vec{H}_1$ et $\vec{H}_2$ induits dans le sol à l'aide de deux boucles 8 et 9. Dans la figure 4 on voit clairement comment en chaque endroit les vecteurs $\vec{H}_1$ et $\vec{H}_2$ ainsi que l'angle $\alpha$ entre les vecteurs $\vec{H}_1$ et $\vec{H}_2$ diffèrent entre eux. A chaque paire de valeurs $H_1$ et $H_2$, ainsi qu'à l'angle $\alpha$ entre $H_1$ et $H_2$, correspond donc une position bien déterminée dans le sol.

De préférence on induit dans les boucles un courant électrique alternatif ayant une fréquence suffisamment élevée, par exemple de l'ordre de 12 KHz. Ceci permet d'induire un champ magnétique modulé qui est moins sensible à des parasites et dont la détection ne nécessite pas de gros efforts de filtrage. Les mesures sont ainsi moins sensibles à la composition particulière du sol dans lequel est appliqué le forage. Une fréquence de 12 KHz permet d'éliminer des interférences et offre une stabilité de signal.

Ces champs magnétiques $H_1$ et $H_2$ vont maintenant induire un courant électrique dans la bobine 7 lorsque cette dernière est entraînée en rotation lors du déplacement de la tête de forage dans le sol. Puisque les champs magnétiques varient en fonction de l'endroit, le courant induit dans la bobine va également varier en fonction de l'endroit où se trouve la tête de forage. Sur base d'une mesure de la valeur du courant induit dans la bobine on peut donc déterminer la position dans le sol de la tête de forage ainsi que suivre sa progression.

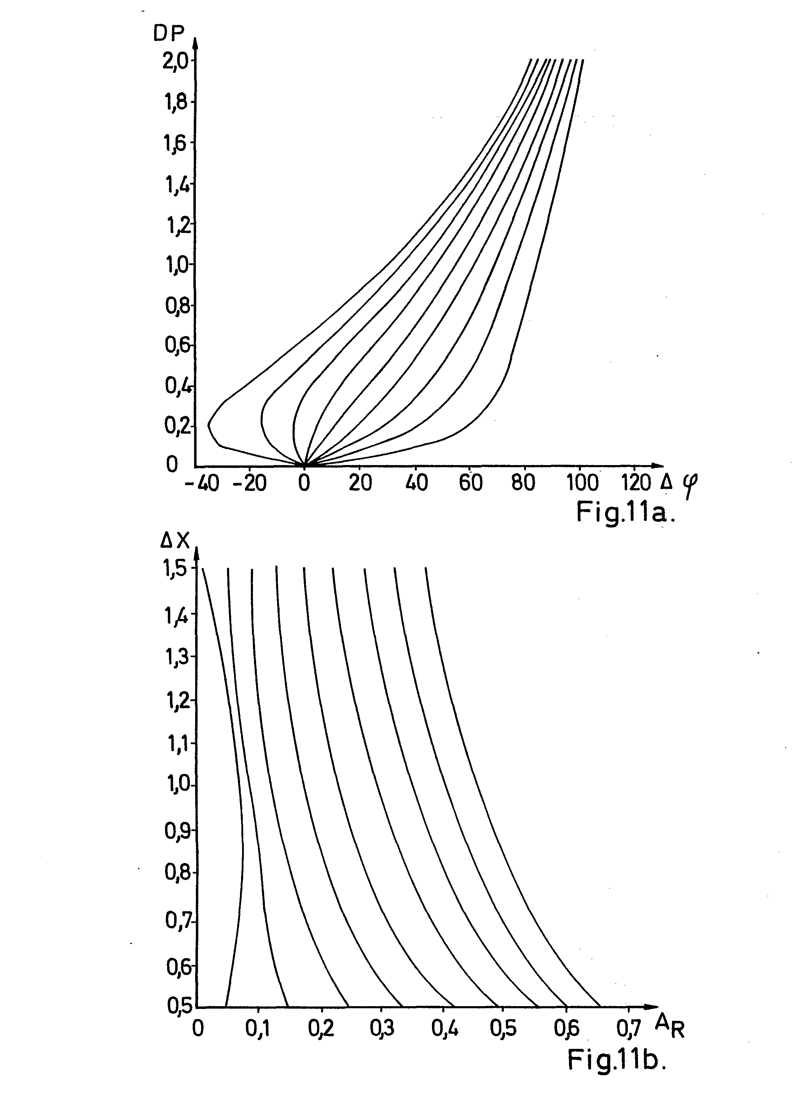

Pour déterminer la position de la tête de forage dans le sol on va maintenant mesurer alternativement et en synchronisme avec la création des champs $H_1$ et $H_2$ les courants induits par chacun des champs magnétiques $H_1$ et $H_2$ dans le sol. En particulier, on va mesurer l'amplitude $A_1$ resp. $A_2$ du courant $C_1$ resp. $C_2$ induit dans la bobine par le champ $H_1$ resp. $H_2$, ainsi que la différence de phase $\Delta\varphi$ entre les courants $C_1$ et $C_2$ (voir figure 5). En effet, dû au fait que pour la plupart des endroits l'angle $\alpha$ entre $H_1$ et $H_2$ est différent de zéro, les phases des courants $C_1$ et $C_2$ seront différentes en fonction de l'endroit. Cette différence de phase permet maintenant d'en déduire la position de la tête de forage. La figure 11a illustre le rapport entre la différence de phase $\Delta\varphi$ et la profondeur (DP) dans le sol. La figure 11b illustre le rapport entre le décalage horizontal $\Delta x$ par rappot au plan vertical 5 et le rapport d'amplitude $A_R$ des courants.

La façon dont est déterminée la différence de phase $\Delta\varphi$ entre les courants $C_1$ et $C_2$ sera maintenant expliquée plus en détails à l'aide de la figure 5 où sont repris deux sinusoïdes représentant chacun un exemple d'un courant induit par le champ magnétique dans la bobine. Dans le sens vertical de cette figure 5 est représentée l'intensité du courant induit dans la bobine et le sens horizontal représente le temps. On suppose que le courant $C_1$ est induit par le champ magnétique $H_1$ alors que le courant $C_2$ est induit par le champ magnétique $H_2$. Comme on peut le constater dans cette figure 5, les deux courants ont une phase et une amplitude différentes. Pour connaître la différence de phase $\Delta\varphi$ entre la phase $\varphi_1$ du courant $C_1$ et la phase $\varphi_2$ du courant $C_2$ on mesure maintenant la différence de temps $\Delta t = t_1 - t_0$ entre le moment où le courant $C_1$ resp. $C_2$ a une intensité égale à zéro. On mesure également la période P du courant $C_1$. La différence de phase est alors égale à :

$$\Delta\varphi = \frac{\Delta t}{P} \cdot 360°$$

La mesure de l'amplitude $A_1$ resp. $A_2$ sont réalisée par des moyens connus. Toutefois pour déterminer la position de la tête de forage on n'utilise de préférence pas la valeur absolue de l'amplitude, mais bien la valeur relative :

$$A_R = \frac{A_1}{A_2}$$

En effet en utilisant la valeur relative il n'est pas nécessaire d'utiliser un système de référence ni de prendre en compte des paramètres charactérisant le sol dans lequel on applique le forage.

Sur base des mesures $\Delta\varphi$ et $A_R$, on peut maintenant déduire la position de la tête de forage dans le sol et ainsi surveiller sa progression. La déduction de ladite position est réalisée à l'aide d'une unité de traitement de données, par exemple un microprocesseur, programmé en conséquence. Cette unité de traitement de données est ainsi programmée pour résoudre les deux équations suivantes :

$$\text{profondeur } Y = \sum_{i=0}^{n} \sum_{j=0}^{n} a_{ij} \, \Delta\varphi_i \, A_{Rj}$$

$$\text{décalage} \\ \text{hor. } \Delta X = \sum_{i=0}^{n} \sum_{j=0}^{n} b_{ij} \, \Delta\varphi_j \, A_{Rj}$$

où $a_{ij}$ et $b_{ij}$ sont des paramètres déduits sur base d'une simulation. La combinaison des valeurs $\Delta\varphi$, $A_R$ permet ainsi de déterminer la position x, y de la tête de forage

Une méthode alternative pour déterminer la position de la tête de forage consiste par exemple à mettre en mémoire de l'unité de traitement de données des positions (x, y) correspondant aux valeurs mesurées $(A_R, \Delta\varphi)$. Un ensemble $(A_R, \Delta\varphi)$ forme alors une adresse pour adresser la mémoire où est stockée la position correspondante. En fonction de la capacité de la mémoire l'ensemble $(A_R, \Delta\varphi)$ est soit directement utilisé en tant qu'adresse, soit est d'abord manipulé pour en former une adresse.

Le décalage horizontal $\Delta x$ est déterminé par rapport au plan vertical 15 (figure 6) qui est situé au milieu entre les boucles 8 et 9. De préférence les boucles 8 et 9 sont à une distance A l'une de l'autre ce qui permet de créer des champs magnétiques ayant une grande plage pour la différence de phase entre eux et permettant ainsi de déterminer correctement la position jusqu'à de grandes profonduers, par exemple 5 mètres. Mais il va de soi que les boucles peuvent également être disposées côte à côte (A = 0), le plan 15 passant alors à travers la ligne commune des deux boucles.

L'utilisation de deux champs magnétiques permet également de déterminer l'orientation de la tête de forage dans le sol. Ceci est particulièrement avantageux lorsqu'on utilise une tête asymétrique, telle que par exemple la tête de forage décrite dans le brevet allemand n° 30 27 990 et illustrée à la figure 7. Cette tête de forage possède une face oblique et une face arrondie. La face oblique 25 permet de faire monter ou descendre plus facilement la tête de forage. Il est donc important de pouvoir convenablement orienter la face oblique de la tête de forage afin d'envoyer cette tête dans la direction voulue. L'orientation de cette tête de forage peut maintenant être réalisée à l'aide des champs magnétiques. La bobine 7, lorsqu'elle est solidaire de l'axe de la tête de forage, possède une orientation bien définie par rapport à la face oblique de la tête de forage. Lorsqu'on laisse tourner la bobine dans un champ magnétique par exemple le champ $H_1$, l'axe de celle-ci va se trouver un instant parallèle au vecteur du champ $H_1$ et l'on détecte alors un courant d'une intensité zéro dans la bobine. Lorsqu'on amène maintenant cette bobine en la faisant tourner jusqu'à ce qu'elle ait atteint cette position où le courant induit par le champ $H_1$ est égal à zéro on connaît, à 180° près, la position de la face oblique. Puisqu'on connaît la position de la tête de forage dans le sol, on connaît aussi les valeurs des champs magnétiques $H_1$ et $H_2$ en cet endroit, ainsi que l'angle $\alpha$ entre $H_1$ et $H_2$. Il suffit alors de faire tourner la bobine sur l'angle $\alpha$, par exemple dans le sens des aiguilles d'une montre, tout en activant le champ magnétique $H_2$ et de vérifier si ce champ $H_2$ induit un courant d'une intensité zéro dans la bobine. Si tel est le cas, la bobine se trouve en parallèle avec le vecteur $\vec{H}_2$ du champ $H_2$ en cet endroit et on connaît alors l'orientation de la face oblique. Si par contre après avoir fait tourner la bobine sur un angle $\alpha$ on ne détecte pas un courant d'une intensité zéro, c'est que l'on a tourné la bobine dans le mauvais sens et l'on peut donc en déduire que la bobine se trouve à un angle $2\alpha$ par rapport au vecteur $H_2$. Pour vérifier ceci l'on pourrait alors par exemple faire tourner la bobine sur un angle $2\alpha$ dans l'autre sens et vérifier si l'on détecte effectivement un courant zéro induit par le champ $H_2$. Une fois que l'orientation de cette face oblique est connue l'on peut alors faire tourner la tête dans la direction voulue afin de lui donner l'orientation voulue.

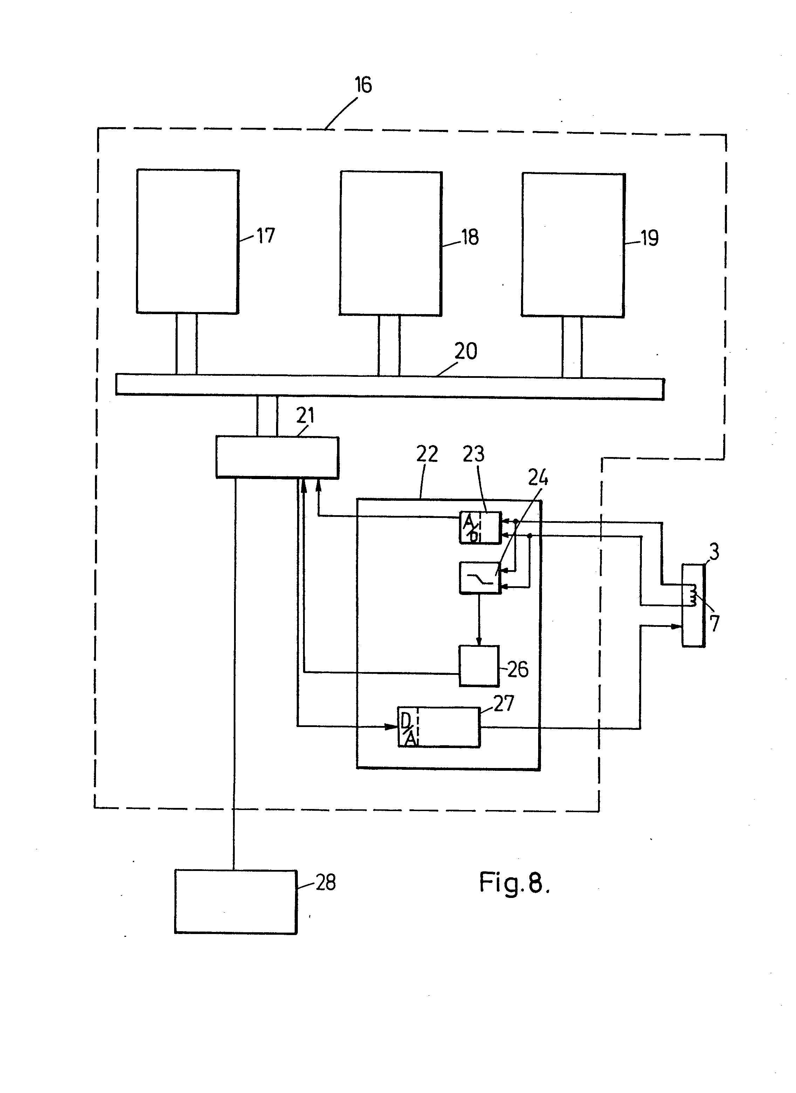

Le dispositif de traitement de données 16 illustré à la figure 8 comporte une unité de traitement de données 17, par exemple un microprocesseur. Ce microprocesseur est relié à un bus 20 pour le transport d'informations (adresses et données). Le dispositif de traitement de données comporte également une interface entrée/sortie 21, une mémoire morte 18 (ROM) et une mémoire de travail 19 (RAM) qui sont chacune reliées au bus 20. L'interface 21 est reliée à une unité de conversion 22 qui comporte un élément de mesure 23 équipé pour mesurer l'amplitude du courant induit dans la bobine et un élément de détection 24 équipé pour détecter la différence de phase des courants $C_1$ et $C_2$ induits dans la bobine 7. L'élément de mesure est équipé d'un convertisseur analogue/numérique (A/D) pour convertir la valeur analogue de l'amplitude mesurée en une valeur numérique qui puisse être traitée par le microprocesseur. Une sortie de cet élément de mesure 23 est reliée à l'interface 21. L'élément de détection 24 a une sortie reliée à un compteur 26 qui est commandé par une horloge. L'élément de détection est équipé pour détecter un niveau zéro du courant. Lorsque le courant passe le niveau zéro, l'élément de détection envoie un signal de départ au compteur 26 qui a été remis à zéro au préalable par le microprocesseur. Le compteur est arrêté lorsque le courant passe à nouveau le niveau zéro. Le compteur est également équipé pour mesurer la période P du courant. Ainsi, on peut déterminer la différence de phase $\Delta\varphi$ des courants. Une sortie du compteur 26 est reliée à une seconde entrée de l'interface 21. L'unité de conversion 22 comporte également un élément de contrôle 27 de la tête de forage et qui est équipé pour traduire les instructions en provenance du microprocesseur en des commandes pour orienter la tête de forage. A cette fin, cet élément de conversion comporte en outre un convertisseur numérique/analogue (D/A).

L'interface entrée/sortie 21 est également reliée à une unité d'entrée de données 28, par exemple un clavier ou un lecteur pour disque souple (floppy disc). Cette unité d'entrée de données sert à introduire entre autres le trajet que doit suivre la tête de forage dans le sol. Ce trajet peut, au préalable, être complètement décrit sur un disque souple.

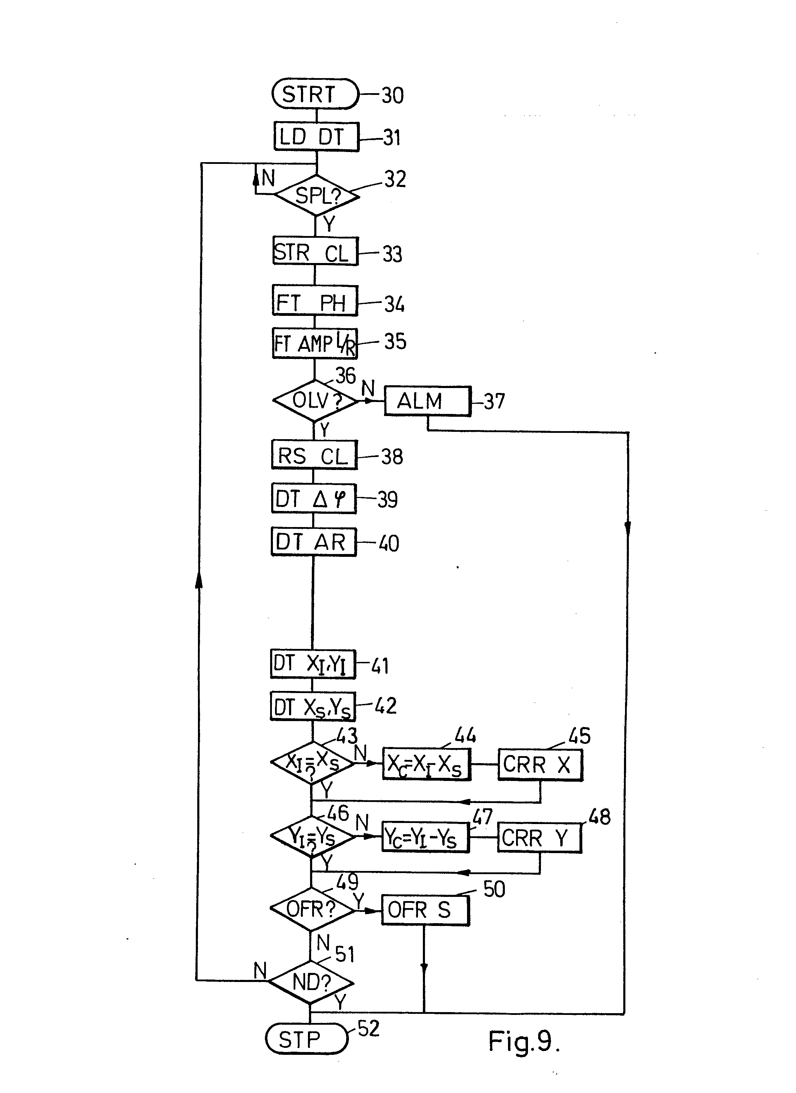

La figure 9 illustre, à l'aide d'un organigramme, un exemple d'un programme de gestion pour l'exécution du procédé suivant l'invention. L'exécution de ce programme de gestion permet de déterminer, durant le forage, la position dans le sol de la tête de forage et permet aussi de réorienter la tête de forage lorsque celle-ci aura dévié de la trajectoire qui lui est imposée. Le programme de gestion est exécuté sous contrôle de l'unité de traitement de données. Lorsqu'une galerie de faible section doit être forée dans le sol, le microprocesseur démarre (STRT; 30) l'exécution du programme de gestion dès que le champ magnétique a été créé. Les différentes instructions de ce programme de gestion sont par exemple stockées dans la mémoire morte 18. Les différentes étapes de ce programme de gestion seront maintenant décrites ci-dessous.

31 LD DT : Le microprocesseur demande à l'utilisateur d'introduire le trajet (longueur, profondeur, orientation, etc.) et stocke ces données après les avoir reçues dans la mémoire de travail 19. Le microprocesseur charge également dans cette mémoire de travail des données relatives au champ magnétique et à la bobine.

32 SPL ? : La détection de la position de la tête de forage se fait par échantillonnage, par exemple à une fréquence de 1/3 Hz. Le microprocesseur vérifie si l'on a atteint le début d'une nouvelle période d'échantillonnage et à cette fin il est par exemple équipé d'une horloge et détecte par exemple les flancs montants d'un signal d'horloge calibré à la fréquence d'échantillonnage. Lorsque le début d'une nouvelle période a été atteint (Y), le microprocesseur passe à l'étape suivante.

33 STR CL : Le microprocetteur fait démarrer une autre horloge, positionnée à un temps prédéterminé, par exemple deux secondes.

34 FT PH : Le microprocesseur va lire et stocker la valeur $\Delta t$ indiquée par le compteur 26 ainsi que la valeur P. Après lecture de ces valeurs, le microprocesseur remet le compteur 26 à zéro afin qu'un nouveau cycle de mesure puisse débuter. Les valeurs $\Delta t$, P sont transformées en valeurs numériques avant d'être transmises au microprocesseur.

35 FT AMP L/R : Le microprocesseur envoie, via l'interface entrée/sortie un signal de commande à l'élément de mesure 23, afin de prélever les valeurs d'amplitudes $A_1$ et $A_2$ des courants $C_1$ et $C_2$ induits. Les valeurs d'amplitude mesurées sont converties en valeurs numériques à l'aide du convertisseur analogue/numérique (A/D) de l'élément de mesure et ensuite envoyées vers le microprocesseur.

36 OLV ? : Le microprocesseur vérifie si ledit temps prédéterminé (étape 33) s'est écoulé. A cette fin, il reçoit de ladite autre horloge un signal indiquant que le temps prédéterminé s'est écoulé. Après réception de ce dernier signal, le microprocesseur vérifie si durant ce temps prédéterminé le courant induit dans la bobine n'a pas passé le niveau zéro, cela signifie que la tête de forage ne tourne plus et donc qu'il n'y a plus de courant induit dans la bobine.

37 ALM : Au cas où le niveau zéro n'a pas été croisé (N) durant ledit temps prédéterminé, le microprocesseur engendre un signal d'alarme qui va arrêter le forage.

38 RS CL : Au cas où le niveau zéro a été croisé (Y) durant ledit temps prédéterminé, le microprocesseur remet ladite autre horloge à zéro.

39 DT $\Delta\varphi$ : Sur base des valeurs $\Delta t$ et P qu'il vient de stocker, le microprocesseur va maintenant déterminer la valeur

$\Delta\varphi = \frac{\Delta t}{P}$ x 360° indiquant la différence de la phase.

40 DT $A_R$ : Sur base des valeurs $A_1$ et $A_2$ le microprocesseur détermine la valeur $A_R$

41 DT $X_I$, $Y_I$ : Sur base des valeurs $A_R$ et $\Delta\varphi$, le microprocesseur va maintenant déterminer les coordonnées $X_I$, $Y_I$ die la position de la tête de forage. Ces coordonnées sont déterminées de la façon mentionnée au préalable.

42 DT $X_S$, $Y_S$ : Le microprocesseur va maintenant déterminer une valeur de consigne assignée à la progression instantanée de la tête de forage. Pour cela, le microprocesseur utilise, d'une part, le trajet que doit suivre la galerie à forer et, d'autre part, la coordonnée Z indiquant la distance parcourue dans le sol par la tête de forage.

43 $X_I = X_S$ ? : Le microprocesseur compare la coordonnée $X_I$, indiquant la position dans le plan horizontal où se trouve la tête de forage, à la position de consigne $X_S$.

44 $X_C = X_I - X_S$ : Au cas où la coordonnée $X_I$ ne correspond pas à la coordonnée de consigne $X_S$, le microprocesseur détermine la différence $X_C$ entre ces deux coordonnées.

45 CRR X : Le microprocesseur engendre un premier signal de correction et l'envoie à l'unité de contrôle de la tête de forage. Le microprocesseur envoie également la valeur $X_C$ à l'unité de contrôle. Après réception de ce premier signal de contrôle et de la valeur $X_C$, l'unité de contrôle va, sur base de cette valeur $X_C$, réorienter la tête de forage dans le plan horizontal.

46 $Y_I = Y_S$ ? : Le microprocesseur compare la coordonnée $Y_I$, indiquant la position dans le plan vertical où se trouve la tête de forage, à la position de consigne $Y_S$.

47 $Y_C = Y_I - Y_S$ : Au cas où la coordonnée $Y_I$ ne correspond pas à la coordonnée de consigne $Y_S$, le microprocesseur détermine la différence $Y_C$ entre ces deux coordonnées.

48 CRR Y : Le microprocesseur engendre un second signal de correction et l'envoie à l'unité de contrôle de la tête de forage. Le microprocesseur envoie également la valeur $Y_C$ à l'unité de contrôle. Après réception de ce second signal de contrôle et de la valeur $Y_C$, l'unité de contrôle va, sur base de cette valeur $Y_C$, réorienter la tête de forage dans le plan vertical.

49 OFR ? : Le microprocesseur vérifie si les coordonnées $X_I$, $Y_I$ ne se rapprochent pas des limites dans lesquelles la mesure du courant induit dans la bobine reste fiable. Par exemple $X_I$ 1 m, $Y_I$ 2,50 m.

50 OFR S ? : Au cas où la limite indiquée est atteinte ou même dépassée, le microprocesseur envoie un message "hors des limites" à l'utilisateur et arrête le forage.

51 ND ? : Le microprocesseur vérifie si la tête de forage a atteint le bout de la galerie à forer. Ceci est effectué, par exemple, à l'aide de la coordonnée $Z_I$. Au cas où le bout de la galerie n'a pas encore été atteint, le microprocesseur reprend le programme à l'étape 32 SPL.

52 STP : Au cas où le bout de la galerie a été atteint, le procédé de forage est arrêté ainsi que l'exécution du programme de gestion.

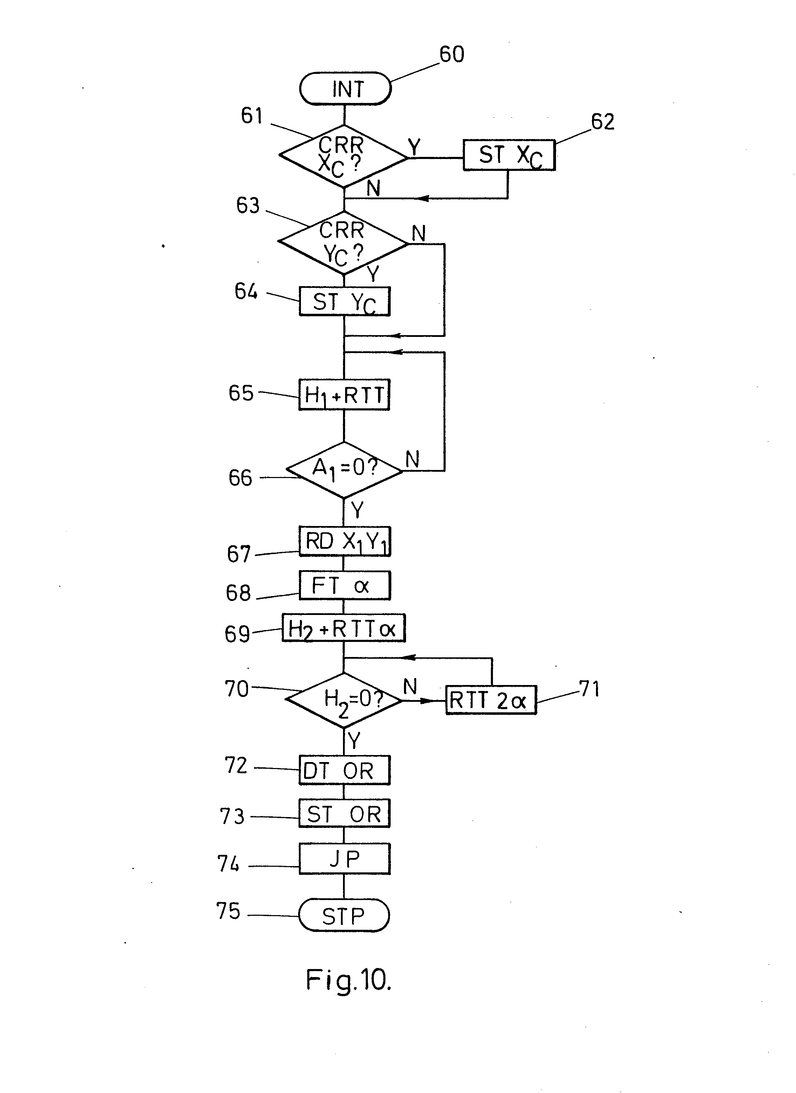

La réorientation de la tête de forage sera maintenant décrite plus en détails à l'aide de l'organigramme illustré à la figure 10.

60 INT : Lorsque le microprocesseur 17 qui détermine la position ($X_I$, $Y_I$) de la tête de forage ainsi que, si nécessaire, engendre les signaux de correction, a engendré un signal de correction, par exemple sous forme d'un signal d'interruption (INTERRUPT), il envoie ce signal d'interruption au processeur de gestion qui gère la conduite dans le sol de la tête de forrage. (Le cas échéant cela peut être le même microprocesseur 17). Lorsque ce processeur de gestion a reçu le signal d'interruption, il va arrêter la progression de la tête de forage et va démarrer un programme permettant de réorienter la tête de forage.

61 CRR X ? : Le processeur de gestion vérifie s'il s'agit d'un premier signal de correction.

62 ST $X_C$ : AU cas où il s'agit d'un premier signal de correction, le processeur de gestion mémorise la valeur $X_C$ qui accompagne le premier signal de correction.

63 CRR Y ? : Le processeur de gestion vérifie s'il s'agit d'un second signal de correction.

64 ST $Y_C$ : Au cas où il s'agit d'un second signal de correction, le processeur de gestion mémorise la valeur $Y_C$.

65 $H_1$ + RTT : Le champ magnétique $H_1$ est créé et l'on fait tourner lentement la tête de forage.

66 $A_1 = 0$ ? : Le processeur de gestion vérifie si l'amplitude du courant induit par le champ $H_1$ dans la bobine égale zéro (indiquant que la bobine se trouve en parallèle au champ $H_1$).

67 RD $X_I Y_I$ : Le processeur de gestion va maintenant prélever les coordonnées $X_I$, $Y_I$ qui viennent d'être déterminées.

68 FT$\alpha$ : Puisque pour chaque position $X_I$, $Y_I$ il y a un angle $\alpha$ bien défini entre les vecteurs des champs magnétiques $H_1$ et $H_2$ le processeur de gestion va maintenant déterminer l'angle $\alpha$ pour la position momentanée $X_I$, $Y_I$ de la tête de forage. Ceci est par exemple réalisé à l'aide d'une mémoire table où sont mémorisées ces valeurs d'angle $\alpha$ pour les différentes positions.

69 $H_2$ + RTT$\alpha$ : Le champ magnétique $H_2$ est maintenant créé et l'on fait tourner lentement la tête de forage sur un angle $\alpha$ dans un sens de rotation bien défini.

70 $A_2 = 0$ ? : Le processeur de gestion vérifie si l'amplitude $A_2$ du courant induit par le champ $H_2$ dans la bobine égale zéro.

71 RTT 2$\alpha$ : Si l'amplitude $A_2$ du courant n'égale pas zéro, c'est que le sens de rotation n'était pas le bon, et la tête de forage est alors déplacée sur un angle $360°-2\alpha$ en la faisant tourner dans le même sens de rotation.

72 DR OR : Sur base des valeurs $X_C$ et $Y_C$ et en partant de la position dans laquelle l'on vient de tourner la tête de forage, le processeur de gestion calcule la nouvelle orientation à donner à la tête de forage.

73 ST OR : Le processeur de gestion oriente la tête de forage suivant la nouvelle orientation qu'il vient de calculer.

74 JP : Le processeur de gestion envoie un signal au microprocesseur qui surveille la progression de la tête de forage lui indiquant qu'il redémarre le procédé de forage.

75 STP : Le programme de réorientation est ainsi achevé.

**Revendications**

1. Procédé pour surveiller, lors d'un forage dans le sol d'une galerie de faible section, la progression d'une tête de forage orientable, suivant lequel on crée dans le sol, autour d'au moins une partie d'une trajectoire à suivre par la tête de forage, au moins deux champs magnétiques différents et où pour chacun des champs magnétiques créés on prélève un courant induit par ce champ magnétique dans une bobine associée à la tête de forage, et on mesure chaque fois l'amplitude du courant induit par le champ magnétique créé, caractérisé en ce qu'on détermine la différence de phase entre deux courants induits à peu près au même endroit dans la bobine par deux champs magnétiques différents, la position de la tête de forage étant chaque fois déduite en combinant ladite mesure de l'amplitude et ladite différence de phase.

2. Procédé suivant la revendication 1, caractérisé en ce que pour déterminer ladite position sur base d'amplitude du courant, on détermine le rapport d'amplitude entre deux courants induits à peu près au même endroit dans la bobine par deux champs magnétiques différents.

3. Procédé suivant la revendication 1 ou 2, caractérisé en ce que pour déterminer ladite différence de phase on mesure la différence de temps entre les moments où les deux courants ont une intensité égale à zéro.

4. Procédé suivant la revendication 3, caractérisé en ce que l'on détermine également la période d'au moins un courant induit dans la bobine pour déterminer ladite différence de phase.

5. Procédé suivant l'une des revendications 1 à 4, caractérisé en ce que l'on crée deux champs magnétiques à partir de deux boucles disposées l'une à côté de l'autre sensiblement parallèles entre elles et à la trajectoire ainsi qu'à une distance prédéterminée l'une de l'autre.

6. Procédé suivant la revendication 5, caractérisé en ce que pour créer les champs magnétiques on fait passer un courant alternatif dans les boucles, lequel courant possède une fréquence d'au moins 1 KHz.

7. Procédé suivant l'une des revendications 5 ou 6, caractérisé en ce que l'on alimente les boucles à partir d'une même source de tension et que le courant est envoyé alternativement dans l'une et dans l'autre boucle.

8. Procédé suivant l'une des revendications 5 ou 6, caractérisé en ce que l'on alimente chacune des boucles en un courant alternatif dont la fréquence est différente pour chacune des boucles.

9. Procédé suivant l'une quelconque des revendications 1 à 8, caractérisé en ce que, pour orienter l'axe de la tête de forage, on détermine un ensemble de positions de consigne et que, pour chaque position déterminée, on compare cette dernière position à la position de consigne assignée à la progression instantanée de la tête de forage et, dans le cas où la position déterminée ne correspond pas à ladite position de consigne, on réoriente la tête de forage pour qu'elle rejoigne la position de consigne.

10. Procédé suivant la revendication 9, caractérisé en ce que pour réorienter la tête de forage on amène d'abord la tête de forage dans une position prédéterminée par rapport à au moins un champ magnétique et que la tête de forage est ensuite réorientée à partir de cette position prédéterminée.

11. Procédé suivant la revendication 10, caractérisé en ce qu'après avoir amené la bobine de la tête de forage dans une position sensiblement parallèle à un premier champ magnétique on fait tourner la tête de forage pour l'amener dans une autre position dans laquelle la bobine se trouve sensiblement parallèle à un deuxième champ magnétique.

12. Dispositif pour surveiller la progression dans le sol d'une tête de forage orientable, comprenant une tête de forage (3) à laquelle est associée une bobine (7), des premiers moyens (8, 9) pour créer dans le sol, autour d'au moins une partie d'une trajectoire à suivre par la tête de forage, au moins deux champs magnétiques différents, des moyens (23) pour mesurer l'amplitude d'un courant induit dans la bobine par un champ magnétique, caractérisé en ce que le dispositif comporte des deuxièmes moyens (24, 26) pour déterminer la différence de phase entre deux courants induits à peu près au même endroit dans la bobine par deux champs magnétiques différents, et des troisièmes moyens pour déduire la position de la tête de forage en combinant la mesure d'amplitude et la différence de phase.

13. Dispositif suivant la revendication 12, caractérisé en ce que les moyens pour mesurer l'amplitude sont également agencés pour déterminer le rapport d'amplitude entre deux courants induits à peu près au même endroit dans la bobine par deux champs magnétiques différents.

14. Dispositif suivant la revendication 12 ou 13, caractérisé en ce que les deuxièmes moyens sont agencés pour mesurer la différence de temps entre les moments où les deux courants ont une intensité égale à zéro.

15. Dispositif suivant l'une des revendications 12-14, caractérisé en ce que le dispositif comporte des moyens de réorientation de la tête de forage, agencé pour amener la tête de forage dans une position prédéterminée par rapport à au moins un champ magnétique.

Fig.1.

Fig.2.

Fig.4.

$I1$ $I2$

$(X,Y)$

$H1$ $H2$

$H$

**Fig.3.**

**Fig.7.**

25

B A B

$X_1$

8 9 11

$Y_1$

7

15 **Fig.6.**

$I$

$A_1$

$A_2$

$P$

$t_0$

$C_1$

$\Delta t$

$t$

$t_1$

$C_2$

**Fig.5.**

Fig.8.

Fig.9.

Fig.10.

Fig.11a.

Fig.11b.